# EUROPEAN PATENT SPECIFICATION

(11) **EP 0 721 743 B1**
(45) Date of publication and mention of the grant of the patent: **06.12.2000**
(21) Application number: 96200058.4
(22) Date of filing: 12.01.1996
(51) Int. Cl.: A23L 1/33, A23B 4/005, A23B 4/06

(54) **Improved process for preparing a shellfish product and product obtained**
Verbessertes Verfahren zur Herstellung eines Schalentier-Produktes und erhaltenes Produkt
Procédé amélioré pour la préparation de produits de crustacés ou coquillages et produit obtenu

(30) Priority: 12.01.1995 NZ 27033095
(43) Date of publication of application: 17.07.1996
(73) Proprietor: Turner, John Charles, Nelson (NZ); McFarlane, Duncan John, Nelson (NZ); Turner, Noel Arthur, Wanganui (NZ)
(72) Inventor: Turner, John Charles, Nelson (NZ); McFarlane, Duncan John, Nelson (NZ); Turner, Noel Arthur, Wanganui (NZ)
(74) Representative: Hall, Robert Leonard

(56) References cited:
- EP-A- 0 242 183
- EP-A- 0 398 667
- FR-A- 2 326 869
- GB-A- 2 155 755

## Description

The invention relates to a method of preparing and packaging mussels or other shellfish, and also to the product so produced.

### BACKGROUND

Shellfish are enjoyed worldwide. The problem faced by those that distribute shellfish is preserving the shellfish so that it is delicious and free from contamination in as cost efficient and practical manner as possible. Traditionally, shellfish are prepared for packaging and distribution by cooking the shellfish live and quickly chilling or freezing the shellfish for immediate packaging. In many cases, the shellfish is vacuum packed for longer term preservation.

Mussels and other bivalves have been prepared by cooking the live mussels in their shells, removing the mussels from their shells or at least removing one side of the shell to produce mussels in their ½ shells, freezing and finally bagging the mussels. This traditional process has problems in that it is vulnerable to contamination by bacteria, especially listeria. This traditional process also has a disadvantage that the shells tend to open during cooking and the natural mussel juices and seawater flavour within the mussels escapes.

Variations of this traditional process are known. For example live mussels may be cooked, removed from shells or ½ the shell removed, optionally smoked, and vacuum packed and frozen. Another process simply involves packing uncooked mussels and freezing in their shells.

In another process mussels are cooked and then the mussel meat is placed in a marinade, and the product is then chilled.

Methods of packaging and/or preparing seafood are described in US Patent Nos 2,546,428 to Byrd, 2,920,968 to Grandy, 3,099,567 to Wallace, et al, 3,508,930 to Bennett, et al, 4,336,274 to Ross, et al, and 5,256,434 to Conway. Byrd describes a process in which crabmeat is first removed from the shell before it is put in a vacuum-sealed container.

EP-A-0 242 183 discloses a process for treating and packing bivalve seafood, comprising arranging the bivalves in a specially adapted envelope, and thereafter heating the bivalves and enveloppe. After heating, the bivalves are quick frozen.

The traditional process of preparing and packaging shellfish has a disadvantage in that it is vulnerable to contamination by bacteria, especially listeria, because, after cooking, there is a time delay before bagging of the mussels and sealing of the bags. Listeria is a particular problem because of its ability to thrive at low temperatures. It also has the problem in that the shells tend to open during cooking, permitting the natural mussel juices and any seawater flavour trapped within the mussels to escape. To overcome that, at least one person has considered compacting the bivalves so close together as to minimize opening of the bivalves when heated. See Carlsson patent described above. That method does not entirely solve the problem because there is still an escape of internal juices. It is also more complicated in that the juices that do escape are not contained very effectively. The juices necessarily separate from the mussels, necessitating duplicative handling. Moreover, the collection of loose mussels in the porous internal container of Carlsson requires dual handling as the processed mussels must then be collected and bagged. While other processes have involved applying pressure to the exterior of the mussels, those processes involve pressures and temperatures that leave the mussel mushy and virtually tasteless; unacceptable fare for discriminating palates. They also fail to properly address the listeria problems.

### SUMMARY OF INVENTION

It is an object of the invention to provide an improved or at least alternative process which minimises the bacterial contamination risk of the traditional process, while retaining the natural mussel juices and seawater flavour of the shellfish in the final processed product.

In broad terms, the invention provides a process for preparing bivalve shellfish for storage comprising the steps of vacuum packing live shellfish within a plastic pouch and then heating the shellfish to a temperature of between 80°C and 110°C at a pressure which counteracts expansion of the pack and for a time sufficiently long to pasteurise the shellfish and eliminate bacteria while preventing the shellfish from opening and maintaining all of the natural juices of the shellfish within the whole shells, and subsequently freezing the plastic pouch containing the shellfish.

### BRIEF DESCRIPTION OF THE DRAWINGS

Figure 1 is a perspective view of the cooked mussel product in its vacuum pack.

Figure 2 is a cross-sectional view of the resulting product.

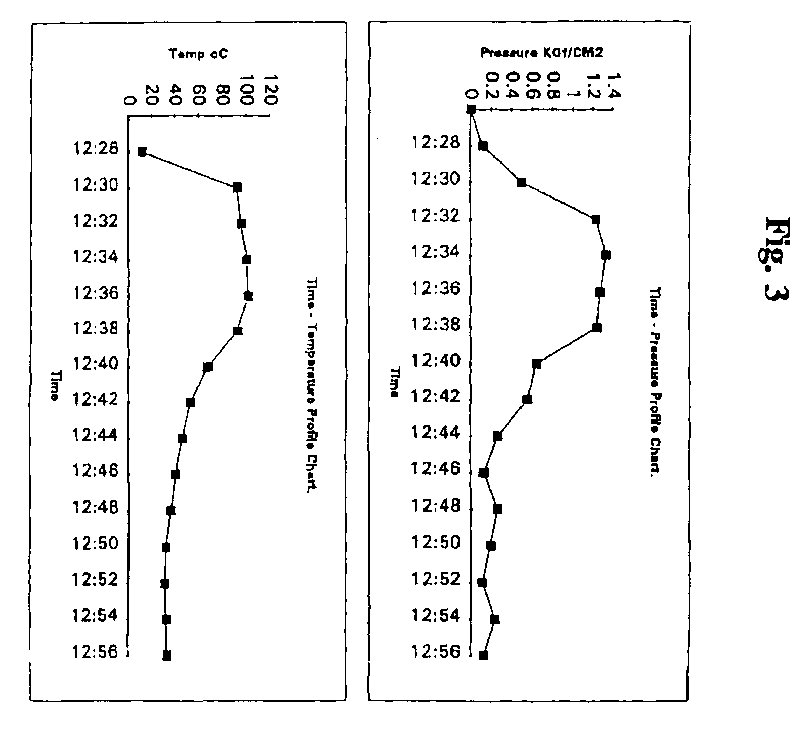

Figure 3 shows pressures and temperatures typically used in the process of the invention

### DETAILED DESCRIPTION

The present invention process comprises the steps of sealing the live shellfish in a single-tier or multi-tier arrangement within a vacuum pack and heating the sealed package of shellfish sufficiently to pasteurize the shellfish but not to fully cook the shellfish. The process also includes an overpressure step of applying sufficient hydrostatic pressure to the package of shellfish to maintain all of the internal juices within the shell. Any inadvertent escape of the juices are confined within the container of shellfish in close association with the shellfish from which the juices originated. After that step, the shellfish may be quickly frozen for long term storage, rather than undesirably stored at ambient pressures on a shelf.

The process includes placing one or more mussels into an impervious container having at least one opening (not shown) for introducing live shellfish such as mussels therethrough. Preferably, the opening must be such that it may be thermally sealed (ie, melted) to contain all fluids therein during subsequent heating and pressurizing steps described below. In a preferred embodiment of the process live mussels or other shellfish are subjected to shell washing (if necessary) before being placed in the container.

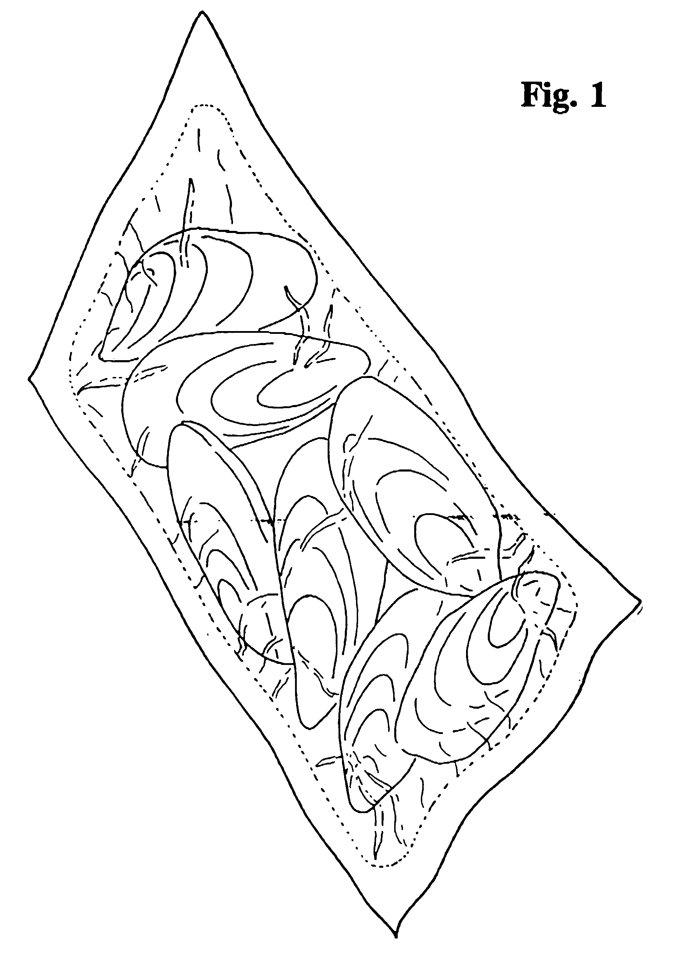

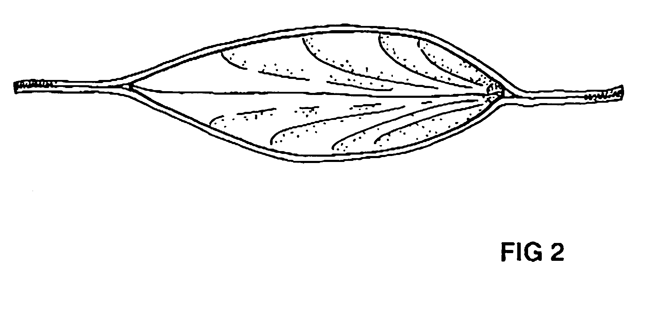

Following introduction into the container, the shellfish are then hermetically vacuum sealed within the impervious container, preferably so as to draw the container closely to the shellfish. Referring to Figure 2, a single mussel is shown closely sealed within a portion of the container so that virtually no air exists within the vacuum-sealed container. In one embodiment, the live shellfish are placed in a single-tier arrangement within the container as shown in Figure 1. It is also contemplated that the mussels be placed in an overlapping format, even in a multiple tiered arrangement if desired.

The inventive process herein also includes the step of heating the sealed package of shellfish sufficiently to "pasteurize" the shellfish; a level of sterilization that is sufficient to eliminate listeria and other bacteria and is efficiently performed without radically altering taste or quality. Pasteurizing requires a shorter time and/or a lower temperature than does a typical sterilization process of the prior art. The pasteurization process kills bacteria that cause spoilage or undesirable fermentation, particularly listeria, without the need to include any additives or preservatives. Pasteurization also results in a more palatable shellfish product that is not mushy. Having been pasteurized effectively, the product can be stored long term in a frozen condition instead of at ambient pressures in a shelf-stable condition. The latter not only has a shorter period of safe consumption but is psychologically unappealing to most seafood consumers. Seafood consumers are more secure in the knowledge that the shellfish that they purchase are preserved in a frozen condition rather than sitting unrefrigerated on a shelf, more readily subject to contamination.

The present process also includes a simultaneous overpressure step that comprises applying sufficient pressure, hydrostatic or otherwise, to the container of shellfish while the shellfish are being heated. The purpose of the overpressure step is twofold: one, to prevent the impervious container from expanding, thereby possibly inducing a break in the seal at a weak point in the container; and two, to maintain all of the internal juices within the shell of the shellfish. The heating step normally results in the meat curling up on its self, forcing the shell to open up part way. The heating step also causes vaporization of the internal mussel juices, thereby causing further expansion of the shells. It is that expansion of the shell that leads to the undesired result of releasing internal juices into the surrounding environment. Regardless of whether the shellfish are arranged in a single-tier format or a multi-tier format, the present inventive process minimizes expansion of the shells to maximize the maintenance of internal juices within the shells.

The heating and overpressure steps may be performed in a retort cooker (not shown) in which the container having a mussel or mussels therewithin is immersed in a heated fluid to which a pressure is applied, thereby imparting pressure upon the mussels during the heating process. Retort cookers have been used in the past to sterilize the contents of canned foods, including seafood. The overpressure aspect described above minimizes the inadvertent escape of juices from the shellfish. Advantageously, any inadvertent juices that do manage to escape despite the overpressure step are confined within the container of shellfish and are immediately available to accent the mussels during final preparation without requiring the handling of multiple products, such as that process shown in Carlsson. The overpressure step is important in that it counteracts the tendency of the container to swell during the heating step. That swelling effect may lead to the container bursting during pasteurisation. Commercially-available retorts with an over-pressure facility are suitable.

After the above-described steps, the shellfish may be quickly frozen in the container for long term storage. The process of the invention gives a different and better taste to the product by retaining the natural shellfish juices and sea flavour without making the meat mushy and tasteless.

The cooker used has an over-pressure facility and commercially-available retorts with an over-pressure facility are suitable. It is preferred that a retort is used which provides computer-controlled reduction of overpressure as the temperature falls after heating is stopped. Overpressures in the range of 0.8 - 2.0 Kgf/cm² are preferred when the cooking is at 100°C, more preferably in the range 1.0 - 1.7, most preferably about 1.3 Kgf/cm². For cooking at higher temperatures these values can be adjusted upwards and for cooking at lower temperatures they can be lowered.

The shellfish are heated under sufficient pressure (in a cooker with a sufficient over-pressure facility) to counteract the tendency of the shells to open during cooking. The resulting product with unopened shells is attractive to consumers.

The cooking temperatures are in the range of 80-110°C. It has been found that these temperatures are sufficient to pasteurize the shellfish without fully cooking the shellfish, permitting additional cooking just prior to consumption. The time of cooking chosen will depend on the size and type of the shellfish and the temperature chosen. Typically it will be in the range 1 minute to 20 minutes. The lower temperatures contemplated by the present invention herein minimize the boiling of mussel juices (vaporization) which, in turn, permits the use of lower pressures to maintain the shells in a closed position.

In a preferred embodiment of the process live mussels or other shellfish are subjected to shell washing (if necessary) and placed in plastic pouches. The pouches are then vacuum packed to a set pressure and then sealed. The vacuum pouches are then transferred to a retort cooker with an over-pressure facility. They are cooked at a temperature of 100°C for a minimum of 3 minutes and are then cooled. Where the cooking time at 100°C is near the minimum of 3 minutes, the total cooking process including time to reach 100°C and cooling time takes approximately 30 minutes. When the product has cooled to an external temperature of 35°C, it is preferred to freeze the product in its vacuum pouch, preferably in a blast freezer.

Retortable plastic pouches are known in the art. A preferred pouch is made from a composite of resilient materials, such as PET19/NY15/CPP70 (19 microns of polyethylene, 15 microns of nylon and 70 microns of Carst polypropylene). The container need not be made of composite material, however, if the results described herein are effectively achieved with other materials.

Any variety of mussel species may be used in the process of the invention including greenshell mussels and blue mussels. Other shellfish that are suitable include King and Queen scallops, flat and Pacific oysters, little necked clam, clams eg. surf clams, pipies and cockles and abalone. New Zealand Greenshell Mussels *(Perna canaliculus)* and New Zealand Blue Mussels (*Mytilus Galloprovincialis*) are a preferred mussel for use in the invention.

### EXAMPLES:

### EXAMPLE 1

New Zealand Greenshell Mussels are received alive and are stored alive at 5°-10°C until processing. Shells are washed in an aluminium drum rotary shell washer using water and the rotary action. The washed mussels are then visually checked and any broken, over or undersized mussels are removed. Then the mussels are placed into retortable plastic pouches and vacuum packed. The pouches of product are heated to a temperature of 100°C for 5 minutes and then cooled. The pouches are retained in the retort cooker and cooled to an external temperature of 35°C. The total cooking process including come up time and cooling time takes approximately 30 minutes. The cooked product is then unloaded from the retort cooker and placed in a blast freezer where it is blast frozen to achieve a core temperature of minus 18°C in approximately 3 hours. The frozen product is then ready for packing. Fig. 1 is a perspective view of the pasteurised mussel product in its vacuum pack, and Fig. 2 is a cross-sectional view of the product.

### EXAMPLE 2

TABLE 1 lists the individual steps of a process of this invention.

**TABLE 1**

| | |
|---|---|
| 1. | Raw product is received in bulk bags from marine farms or commercial harvesters on a truck and is weighed and labelled. The raw material is then stored in a chiller at between 5°C and 10°C. |
| 2. | The raw product is fed from the feed hopper to a shell grader by a feed conveyor. The raw product is mechanically sorted by the shell grader into size groups eg. small, medium large. |
| 3. | The raw product, now in its respective size range, is transferred back into a chiller. The raw product is stored at between 5°C and 10°C until processing. |
| 4. | The raw product is transferred to a aluminium drum rotary shell washer by the shell washer feed conveyor. The raw product is washed in the shell washer using water and the rotary action. |
| 5. | The raw product is visually checked by production staff and any broken, over or under sized product is removed. |
| 6. | The raw product is placed into retortable plastic pouches from plastic shovels by production staff. The pouches are automatically vacuum packed to a set pressure and sealed by vacuum packing machines. |
| 7. | The vacuum sealed pouches are transferred to retort trolleys by production staff. Full trolley loads of pouches are transferred into the retort. The pouches of product are cooked at a temperature of 80-110°C (preferably about 100°C) for a minimum of 3 minutes. The heating is carried out at a pressure up to 1.33 Kgf/cm². Figure 3 and Table 2 show pressures and temperatures used in a typical process of the invention. Pressure is increased to this maximum as the temperature is increased to 101°C and subsequently reduced when heating is discontinued to allow the product to cool. The pouches are then cooled to an external temp of 35°C. NOTE: The cooking process including come up time and cooling time takes approximately 30 minutes. |
| 8. | Trays of pouches are stacked in a blast freezer. The pouches are blast frozen to achieve a core temperature of -18°C in approximately 3 hours. |
| 9. | The trays of frozen pouches are removed from the blast freezer and are packed into cardboard cartons. |
| 10. | The sealed cartons of product are dispatched to either domestic cold storage in a refrigerated truck to await export, or are loaded into a freezer container for export direct from the plant. |

**TABLE 2:**

| Temperature and Pressure during Mussel Preparation Process of Example. | | |
|---|---|---|
| **TIME** | **PRESSURE Kgf/cm**^{**2**} | **TEMP °C** |
| 12.28 | 0.12 | 12.10 |
| 12.30 | 0.50 | 92.50 |
| 12.32 | 1.24 | 96.00 |
| 12.34 | 1.33 | 101.20 |
| 12.36 | 1.27 | 101.60 |
| 12.38 | 1.24 | 92.60 |
| 12.40 | 0.63 | 68.10 |
| 12.42 | 0.55 | 53.60 |
| 12.44 | 0.26 | 47.30 |
| 12.46 | 0.13 | 41.10 |
| 12.48 | 0.25 | 37.00 |
| 12.50 | 0.19 | 32.70 |
| 12.52 | 0.11 | 31.50 |
| 12.54 | 0.24 | 32.90 |
| 12.56 | 0.12 | 33.00 |

The process illustrated in the examples is merely illustrative of the process of the invention. Different types of mussels for example may be used in the process. Generally different temperatures and times may be used. For example, with New Zealand Greenshell Mussels of shell length 40-60 mm, the above process might be varied by reducing the cooking time to 3 minutes. With abalone the above process might be varied by increasing the cooking time to 10-15 minutes.

The foregoing describes the invention including a preferred form thereof. Alterations and modifications as will be obvious to those skilled in the art are intended to be incorporated within the scope hereof.

## Claims

1. A process for preparing bivalve shellfish for storage comprising the steps of vacuum packing live shellfish within a plastic pouch and then heating the shellfish to a temperature of between 80°C and 110°C at a pressure which counteracts expansion of the pack and for a time sufficiently long to pasteurise the shellfish and eliminate bacteria while preventing the shellfish from opening and maintaining all of the natural juices of shellfish within the whole shells, and subsequently freezing the plastic pouch containing the shellfish.

2. A process according to claim 1 wherein the overpressure is in the range 7.8 x 10⁻² - 1.96 x 10⁻¹ bar(0.8-2.0 Kgf/cm²).

3. A process according to claim 1 wherein the overpressure is in the range 9.8 x 10⁻² - 1.67 x 10⁻¹ bar (1.0 - 1.7 Kgf/cm²).

4. A process according to claim 1 wherein the overpressure is 1.27 x 10⁻¹ bar (1.3Kgf/cm²) .

5. A process according to claim 1 wherein the step of freezing the plastic pouch comprises freezing in a blast freezer.

6. A process according to any one of claims 1 to 5 wherein the shellfish comprise mussels.

7. A process according to any one of claims 1 to 5 wherein the shellfish are *Perna canaliculus or Mytalis* *galloprovincialis.*

## Patentansprüche

1. Verfahren zum Präparieren von zweischaligen Schalentieren für die Lagerung, das die Schritte einer Vakuumverpackung von lebenden Schalentieren in einem Kunststoffbeutel und anschließendes Erhitzen der Schalentiere auf eine Temperatur von 80 °C bis 110 °C bei einem Druck, der der Ausdehnung der Packung entgegenwirkt, und für einen ausreichend langen Zeitraum, um die Schalentiere zu pasteurisieren und Bakterien zu eliminieren, während die Schalentiere daran gehindert werden, sich zu öffnen, und alle natürlichen Säfte der Schalentieren innerhalb der ganzen Schalen gehalten werden, und ein anschließendes Gefrieren des die Schalentiere enthaltenden Kunststoffbeutels.

2. Verfahren nach Anspruch 1, bei dem der Überdruck im Bereich von 7,8 × 10⁻² bis 1,96 × 10⁻¹ bar (0,8 bis 2,0 kgf/cm²) liegt.

3. Verfahren nach Anspruch 1, bei dem der Überdruck im Bereich von 9,8 × 10⁻² bis 1,67 × 10⁻¹ bar (1,0 bis 1,7 kgf/cm²) liegt.

4. Verfahren nach Anspruch 1, bei dem der Überdruck 1,27 × 10⁻¹ bar (1,3 kgf/cm²) ist.

5. Verfahren nach Anspruch 1, bei dem der Schritt des Gefrierens des Kunststoffbeutels ein Gefrieren in einem Gebläsegefrierer umfasst.

6. Verfahren nach einem der Ansprüche 1 bis 5, bei dem die Schalentiere Muscheln umfassen.

7. Verfahren nach einem der Ansprüche 1 bis 5, bei dem die Schalentiere *Perna canaliculus* oder *Mytalis galloprovincialis* sind.

## Revendications

1. Procédé de préparation de coquillages bivalves destinées à un stockage, comprenant les étapes consistant à emballer sous vide les coquillages vivants dans un sac en plastique, à chauffer ensuite les coquillages à une température comprise entre 80° C et 110° C, à une pression empêchant l'expansion de l'emballage et pendant un temps suffisamment long pour pasteuriser les coquillages et éliminer les bactéries tout en évitant l'ouverture des coquillages et en maintenant tous les sucs naturels du coquillage à l'intérieur des coquillages entiers, et à refroidir ensuite le sac en plastique contenant les coquillages.

2. Procédé selon la revendication 1, caractérisé en ce que la surpression est comprise entre 7,8 x 10⁻² et 1,96 x 10⁻¹ bar (0,8 à 2,0 Kgf/cm²).

3. Procédé selon la revendication 1, caractérisé en ce que la surpression est comprise entre 9,8 x 10⁻² et 1,67 x 10⁻¹ bar (1,0 à 1,7 Kgf/cm²).

4. Procédé selon la revendication 1, caractérisé en ce que la surpression est de 1,27 x 10⁻¹ bar (1,3 Kgf/cm²).

5. Procédé selon la revendication 1, caractérisé en ce que l'étape de refroidissement du sac plastique comprend un refroidissement dans un refroidisseur à courant d'air.

6. Procédé selon l'une quelconque des revendications 1 à 5, caractérisé en ce que les coquillages comprennent des moules.

7. Procédé selon l'une quelconque des revendications 1 à 5, caractérisé en ce que les coquillages sont des *Perna canaliculus* ou des *Mytalis galloprovincialis.*
